# EUROPÄISCHE PATENTSCHRIFT

(11) **EP 3 272 556 B1**
(45) Veröffentlichungstag und Bekanntmachung des Hinweises auf die Patenterteilung: **22.05.2019**
(21) Anmeldenummer: 17173228.2
(22) Anmeldetag: 29.05.2017
(51) Int. Cl.: B60C 13/04, B60C 23/18, B60C 11/13, B60C 99/00

(54) **FAHRZEUGLUFTREIFEN MIT POLYURETHANSCHAUM ALS WÄRMEISOLATIONSSCHICHT UND VERFAHREN ZUR HERSTELLUNG ZUMINDEST EINER AUS POLYURETHANSCHAUM BESTEHENDEN WÄRMEISOLATIONSSCHICHT**
PNEUMATIC VEHICLE TYRE WITH POLYURETHANE FOAM AS A HEAT ISOLATION LAYER AND METHOD FOR PRODUCING AT LEAST ONE HEAT ISOLATION LAYER MADE OF POLYURETHANE FOAM
ROUE DE VÉHICULE COMPRENANT DE LA MOUSSE DE POLYURÉTHANE EN TANT QUE COUCHE D'ISOLATION THERMIQUE ET PROCÉDÉ DE FABRICATION D'AU MOINS UNE COUCHE D'ISOLATION THERMIQUE COMPRENANT UNE MOUSSE POLYURÉTHANE

(30) Priorität: 22.07.2016 DE 102016213467
(43) Veröffentlichungstag der Anmeldung: 24.01.2018
(73) Patentinhaber: Continental Reifen Deutschland GmbH, 30165 Hannover (DE)
(72) Erfinder: Kleffmann, Jens, 30453 Hannover (DE)
(74) Vertreter: Finger, Karsten

(56) Entgegenhaltungen:
- JP-A- H06 211 007
- JP-A- 2008 030 519
- US-A1- 2006 016 534
- US-A1- 2006 118 223
- US-A1- 2013 146 197

## Beschreibung

Die Erfindung betrifft ein Verfahren zur Herstellung einer aus Polyurethanschaum bestehenden Wärmeisolation an der Oberfläche eines Fahrzeugluftreifens, welcher einen profilierten, Rillen aufweisenden Laufstreifen, Seitenwände und Wulstbereiche aufweist.

Es ist bekannt, an der Innenseite von Fahrzeugluftreifen, beispielsweise über die gesamte Innenseite oder nur radial innerhalb des Laufstreifenbereiches, eine poröse Schalldämpfungsschicht aus Polyurethanschaum anzuordnen. Aus der DE 20 2008 009 008 U1 ist beispielsweise eine derartige Schaumeinlage, die insbesondere zur Dämpfung in einem Frequenzbereich unterhalb von 400 Hz geeignet ist, bekannt, wobei diese Schaumeinlage ein offenporiges, viskoelastisches Schaumteil mit einer Schaumstrukturierung ist, bei welcher die Größe der Poren in Richtung zur Innenseite des Fahrzeugluftreifens abnimmt. Die zum Ausbilden der Schaumeinlage verwendete Kunststoffmasse wird vor dem Aufschäumen derselben in den Fahrzeugreifen bei drehendem Fahrzeugreifen eingebracht. Im Zuge des Vernetzungs- und Aufschäumprozesses erfolgt die Anbindung des Schaumes an die Innenwand des Fahrzeugluftreifens. Eine gesonderte Wärmeableitungseinlage, beispielsweise ein Metallgitter aus Messing oder Aluminium, die zwischen der Schaumeinlage und der Innenseite des Fahrzeugluftreifens eingebracht ist, soll die beim Abrollen des Fahrzeugluftreifens generierte Wärme abführen. Auch aus der JP2008030519A ist eine derartige Schaumeinlage bekannt.

Es ist ferner bekannt, zur Verbesserung der Wärmeisolierung eines Fahrzeugrades aus einem Fahrzeugluftreifen und einer Reifenfelge zur Reduktion des Rollwiderstandes des Fahrzeugluftreifens auf den dem Reifeninnenraum zugewandten Bereich des Tiefbettes einer Reifenfelge eine Wärmeisolationsschicht in Form eines geschäumten und offenzelligen Materials, insbesondere aus Polyurethan, anzubringen. Eine derartige Maßnahme ist beispielsweise aus der DE 10 2012 102 418 A1 bekannt, wobei das geschäumte und offenzellige Material bei einem Reifeninnendruck von mindestens 6 bar im Wesentlichen formstabil sein soll, sodass die komprimierte Luft ungehindert in das offenzellige Material eindringen kann und dadurch die wärmeisolierenden Eigenschaften des offenzelligen Materials erhalten bleiben. Das geschäumte und offenzellige Material wird im Bereich des Tiefbettes der Reifenfelge angeklebt.

Die US 2006/016534 A1 befasst sich mit der Befestigung einer starren, eine Kennzeichnung aufweisenden Auflage auf der Seitenwand eines Fahrzeugluftreifens, insbesondere in eine bei der Vulkanisation des Laufstreifens ausgebildete Vertiefung in der Seitenwand. Die Auflage besteht aus einer äußeren Lage und einer inneren Lage, die aus einem Schaum, beispielsweise Polyurethanschaum, hergestellt ist. Die Auflage wird mit ihrer Schaumlage auf die Seitenwand des Fahrzeugluftreifens angeklebt. Die US 2013/146197 A1 offenbart einen Fahrzeugluftreifen, bei welchem die Seitenwand zumindest zum Teil aus einer Schaumkautschukschicht hergestellt ist. Es ist erwähnt, dass die Schaumkautschukschicht bei der Vulkanisation des Rohreifens in der Vulkanisationsform aushärtet, der Schaumkautschuk wird daher bereits beim Aufbau des Rohreifens bei der Herstellung der Seitenwände verwendet. Durch diese spezielle Ausführung der Seitenwände soll vor allem der Rollwiderstand reduziert werden, während die Rissbeständigkeit der Seitenwände beibehalten wird. Die US 2006/118223 A1 betrifft die Runderneuerung, also die Erneuerung des Laufstreifens, eines Vollgummireifens. Auf dem nach dem Abrieb verbleibenden Gummimaterial wird eine ein- oder zweilagige Polyurethan-Elastomer-Schicht, die bei Raumtemperatur aushärtet, angebracht, indem der Reifen in einer Form positioniert wird und der Zwischenraum zwischen Reifen und Form mit dem Polyurethan-Elastomer aufgefüllt wird, sodass nach dem Aushärten eine Laufstreifenschicht mit Fahrfläche entsteht.

Der Erfindung liegt die Aufgabe zu Grunde, einem Fahrzeugluftreifen auf alternative und einfache Weise wärmeisolierende Eigenschaften zu verleihen, um derart den Rollwiderstand zu senken. Es soll ferner ein einfaches Verfahren zum Bilden von wärmeisolierenden Schichten zur Verfügung gestellt werden.

Gelöst wird die gestellte Aufgabe erfindungsgemäß dadurch, dass ein thixotropes oder flüssiges, ein- oder zweikomponentiges Polyurethansystem unmittelbar auf die Außenseite des Fahrzeugluftreifens aufgebracht wird, unmittelbar beim Auftragen oder zeitverzögert aufschäumt, anschließend aushärtet und zumindest eine Wärmeisolationsschicht bildet, wobei die mit der Reifenfelge in Kontakt kommenden Außenflächen der Wulstbereiche und die Fahrfläche des Laufstreifens ausgespart werden.

Gemäß der Erfindung ist daher wärmeisolierendes Schaummaterial an der Reifenaußenseite angebracht. Aufgrund der Luftanströmung der Reifenaußenseite wird viel Wärmeenergie des Reifens über die Reifenaußenseite an die Umgebung abgeführt. Wird auf die Reifenaußenseite ein wärmeisolierender Schaum angebracht, wird die Wärmeabfuhr vom Reifen in die Umgebung besonders effektiv reduziert. Die durch die Wärmeisolation erreichte erhöhte Lauftemperatur des Reifens führt zu einem reduzierten Reifenrollwiderstand. Üblicherweise ist für das Anbringen eines Schaumes ein Verkleben des Schaumes auf der Reifenoberfläche erforderlich, wobei sich zwischen Schaum und ursprünglicher Reifenoberfläche eine Verklebungsschicht befindet. Eine solche zusätzliche Verklebungsschicht kann verschiedene Nachteile mit sich bringen., wie zum Beispiel einen unvorteilhaften zusätzlichen Beitrag zum Rollwiderstand liefern oder aufgrund von Steifigkeitsunterschieden zwischen verschiedenen Bauteilen zu einem Bauteilversagen durch Bildung von Rissen führen. Mit dem erfindungsgemäßen Verfahren, bei dem flüssiges oder thixotropes Polyurethan direkt auf die Reifenoberfläche aufgebracht wird, kann auf eine zusätzliche Verklebungsschicht verzichtet werden, wodurch auch die beschriebenen Nachteile nicht zum Tragen kommen.

Bei einer bevorzugten Ausführungsform der Erfindung sind Rillen im Laufstreifen zumindest teilweise mit Polyurethanschaum ausgekleidet. Durch die Maßnahme wird im Laufstreifenbereich die Wärmeabfuhr vom Reifen in die Umgebung reduziert. Dabei kann der Polyurethanschaum auch als teilweise Auskleidung entlang des Rillengrundes und/oder entlang einer der Rillenflanken aufgebracht sein.

Bei einer weiteren Ausführungsvariante der Erfindung wird zumindest eine Seitenwand im Bereich zwischen der mit der Reifenfelge in Kontakt kommenden Außenfläche des Wulstbereiches und dem seitlichen Rand der Fahrfläche des Laufstreifens mit Polyurethanschaum versehen. An den Seitenwänden kann eine Wärmeabfuhr vom Reifen in die Umgebung ebenfalls sehr effektiv reduziert werden. Dabei kann vorgesehen sein, dass der Polyurethanschaum bereichsweise durchgehend zwischen der mit der Reifenfelge in Kontakt kommenden Außenfläche des Wulstbereiches und dem seitlichen Rand der Fahrfläche des Laufstreifens aufgebracht wird.

Bei einer besonders vorteilhaften und effektiven Ausführungsform der Erfindung wird zumindest ein Bereich einer Seitenwand, welcher vom radial äußeren Rand der Kontaktfläche des Reifens zur Reifenfelge bis zu jener Stelle an der Seitenwand reicht, an welcher der Reifen seine größte Querschnittsbreite besitzt, vorzugsweise durchgehend, mit Polyurethanschaum versehen.

Gemäß der Erfindung bildet der Polyurethanschaum an der Außenseite des Fahrzeugluftreifens auf den betreffenden Bauteilen bzw. Bereichen Wärmeisolationsschichten mit einer Dicke von 1 mm bis 30 mm, insbesondere bis zu 20 mm, vorzugsweise bis zu 15 mm. Die Wärmeisolationsschichten können eine konstante Dicke aber auch eine variierende Dicke aufweisen, beispielsweise bei einem Verlauf entlang der Seitenwand des Fahrzeugluftreifens. In Rillen des Laufstreifens wird, je nach Rillenbreite, die Dicke bis zu 4 mm betragen.

Der Polyurethanschaum selbst kann offenzellig, gemischtzellig oder geschlossenzellig sein, seine Shore A Härte kann von 0 Shore A bis 50 Shore A betragen. Besonders gut geeignet ist ferner Polyurethanschaum mit einer Dichte von 0,01 g/cm³ bis 0,90 g/cm³.

Zum Aufbringen des Polyurethansystems eignet sich vor allem ein zum FIPFG (Formed - In - Place - Foam - Gasket) - Verfahren analoges Verfahren.

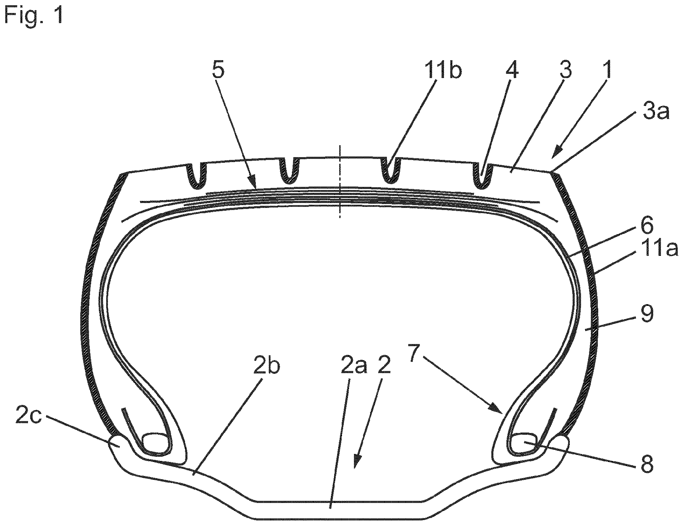

Weitere Merkmale, Vorteile und Einzelheiten der Erfindung werden nun anhand der Zeichnung, die schematisch ein Ausführungsbeispiel darstellt, näher beschrieben. Die einzige Figur, Fig. 1, zeigt ein Fahrzeugrad aus einem Fahrzeugluftreifen und einer Reifenfelge im Querschnitt.

Fig. 1 zeigt schematisch einen Querschnitt eines Fahrzeugluftreifens 1 für LKW, montiert auf einer Tiefbettfelge 2 mit einem Felgenbett 2a, Felgenschultern 2b und Felgenhörner 2c. Der Fahrzeugluftreifen 1 weist einen Laufstreifen 3 mit einer Profilierung auf, von welcher beispielhaft Umfangsrillen 4 gezeigt sind. Der Laufstreifen 3 kann weitere, nicht gezeigte Profilrillen aufweisen, die beispielsweise in axialer Richtung verlaufen und gemeinsam mit weiteren Profilrillen Profilpositive, wie Profilblöcke oder Profilrippen bilden. Weitere dargestellte Bestandteile des Fahrzeugluftreifens 1 sind ein Gürtelverband 5, welcher in an sich bekannter Weise aus mehreren Gürtellagen bestehen kann, eine ein- oder mehrlagige Karkasseinlage 6, welche ebenfalls in an sich bekannter Weise ausgeführt sein kann und in Wulstbereichen 7 Wulstkerne 8 umschlingt und Seitenwände 9. Die Wulstbereiche 7 liegen an den Felgenschultern 2b und an den Felgenhörnern 2c an.

An der Außenseite des Fahrzeugluftreifens 1 ist zumindest eine Schaumschicht als Wärmeisolationsschicht 11a, 11b aufgebracht. Bei der in Fig. 1 gezeigten Ausführungsform befinden sich Wärmeisolationsschichten 11a auf jeder Seitenwand 9. Die Wärmeisolationsschichten 11a verlaufen zwischen den mit der Reifenfelge 2 in Kontakt kommenden Außenflächen der Wulstbereiche 7 und den seitlichen Rändern 3a der Bodenaufstandsfläche bzw. Fahrfläche des Laufstreifens 3. Auf den Seitenwänden 9 werden zumindest die mit Kennzeichen bzw. Beschriftungen versehenen Bereiche ausgespart und nicht mit Wärmeisolationsschichten 11a bedeckt. Ansonsten können die Wärmeisolationsschichten 11a beliebige Teilbereiche bedecken. Bevorzugt ist eine Ausführung, bei der Bereiche von Wärmeisolationsschichten 11a an den Seitenwänden 9 durchgehend zwischen der mit der Reifenfelge 2 in Kontakt kommenden Außenfläche der Wulstbereiche und der Stelle mit der größten Querschnittsbreite aufgebracht sind.

Die Wärmeisolationsschichten 11b sind Auskleidungen von Profilrillen, wobei sämtliche Profilrillen oder einige der Profilrillen, zumindest teilweise, insbesondere komplett, mit Wärmeisolationsschichten 11b ausgekleidet sind. Zum Auskleiden eignen sich vor allem Profilrillen, deren Mindestbreite an der Laufstreifenaußenfläche 3 mm beträgt.

Die Wärmeisolationsschichten 11a, 11b sind in situ hergestellt, also durch ein unmittelbares Aufbringen eines thixotropen oder flüssigen, einkomponentigen oder zweikomponentigen Polyurethansystems auf die betreffenden Bereiche an der Außenseite des Fahrzeugluftreifens, insbesondere mittels eines zum bekannten FIPFG (Formed-In-Place-Foam-Gasket) analogen Verfahrens. Das aufgebrachte Polyurethansystem schäumt zur Schaumschicht auf, wobei das Aufschäumen unmittelbar beim Auftragen auf die Reifenaußenfläche oder auch zeitverzögert erfolgen kann. Der aufgebrachte Schaum härtet mit oder ohne chemische Reaktion, je nach dem verwendeten Polyurethansystem, aus. Das eingesetzte Polyurethansystem kann auf Polyetherbasis oder Polyesterbasis sein. Die gebildete Schaumschicht kann offenzellig, gemischtzellig oder geschlossenzellig sein und wird mit einer Dicke von 1 mm bis zu 30 mm, insbesondere bis 20 mm, vorzugsweise bis zu 15 mm, je nach der Position am Reifen, hergestellt. Die Shore A Härte des Schaumes nach DIN ISO 7619-1 kann zwischen 0 und 50 Shore A betragen, seine Dichte beträgt zwischen 0,01 g/cm³ und 0,90 g/cm³.

Bei einem zweikomponentigen Polyurethansystem werden das Harz und der Härter entsprechend eines vorgegebenen Mischungsverhältnisses in einer Dosieranlage gemischt und umgehend auf die betreffenden Bereiche der Felge aufgetragen. Mit dem Verfahren gemäß der Erfindung lassen sich Wärmeisolationsschichten herstellen, die entweder eine zumindest weitgehend konstante Dicke oder einen ab- bzw. zunehmenden Dickenverlauf aufweisen.

### Bezugsziffernliste

- 1: Fahrzeugluftreifen
- 2: Tiefbettfelge
- 2a: Felgenbett
- 2b: Felgenschulter
- 2c: Felgenhorn
- 3: Laufstreifen
- 3a: Rand
- 4: Profilrille
- 5: Gürtelverband
- 6: Karkasseinlage
- 7: Wulstbereich
- 8: Wulstkern
- 9: Seitenwand
- 11a, 11b: Wärmeisolationsschicht

## Patentansprüche

1. Verfahren zur Herstellung einer aus Polyurethanschaum bestehenden Wärmeisolation (11a, 11b) an der Oberfläche eines Fahrzeugluftreifens, welcher einen profilierten, Rillen (4) aufweisenden Laufstreifen (3), Seitenwände (9) und Wulstbereiche (7), aufweist,
**dadurch gekennzeichnet,**
**dass** ein thixotropes oder flüssiges, ein- oder zweikomponentiges Polyurethansystem unmittelbar auf die Außenseite des Fahrzeugluftreifens aufgebracht wird, unmittelbar beim Auftragen oder zeitverzögert aufschäumt, anschließend aushärtet und zumindest eine Wärmeisolationsschicht (11a, 11b) bildet, wobei die mit einer Reifenfelge (2) in Kontakt kommenden Außenflächen der Wulstbereiche und die Fahrfläche des Laufstreifens (3) ausgespart werden.

2. Verfahren nach Anspruch 1, **dadurch gekennzeichnet, dass** das Polyurethansystem an der Außenseite einer Seitenwand (9) im Bereich zwischen der mit der Reifenfelge (2) in Kontakt kommenden Außenfläche des Wulstbereiches (7) und dem seitlichen Rand (3a) der Fahrfläche des Laufstreifens (3) aufgebracht wird.

3. Verfahren nach Anspruch 1, **dadurch gekennzeichnet, dass** das Polyurethansystem in Rillen (4) des Laufstreifens (3), insbesondere als die Rillen (4) zumindest zum Teil auskleidende Schicht, aufgebracht wird.

4. Verfahren nach einem der Ansprüche 1 bis 3, **dadurch gekennzeichnet, dass** das Polyurethansystem mittels eines zum FIPFG (Formed-In-Place-Foam-Gasket) - Verfahrens analogen Verfahrens aufgebracht wird.

5. Verfahren nach einem der Ansprüche 1 bis 4, **dadurch gekennzeichnet, dass** das aufgebrachte Polyurethansystem auf Polyether oder Polyester basiert.

## Claims

1. Method for producing a thermal insulation (11a, 11b) consisting of polyurethane foam on the surface of a pneumatic vehicle tyre, which comprises a profiled tread (3) having grooves (4), sidewalls (9) and bead regions (7),
**characterized**
**in that** a thixotropic or liquid, one- or two-component polyurethane system is applied directly to the outer side of the pneumatic vehicle tyre, expands immediately when applied or after a time delay, subsequently cures and forms at least one thermal insulating layer (11a, 11b), the outer surfaces of the bead regions that come into contact with a tyre rim (2) and the running surface of the tread (3) being omitted.

2. Method according to Claim 1, **characterized in that** the polyurethane system is applied on the outer side of a sidewall (9) in the region between the outer surface of the bead region (7) that comes into contact with the tyre rim (2) and the lateral periphery (3a) of the running surface of the tread (3).

3. Method according to Claim 1, **characterized in that** the polyurethane system is applied in grooves (4) of the tread (3), in particular as a layer that at least partly lines the grooves (4).

4. Method according to one of Claims 1 to 3,
**characterized in that** the polyurethane system is applied by means of a method analogous to the FIPFG (Formed-In-Place-Foam-Gasket) method.

5. Method according to one of Claims 1 to 4,
**characterized in that** the applied polyurethane system is based on polyether or polyester.

## Revendications

1. Procédé de fabrication d'une isolation thermique (11a, 11b) constituée d'une mousse de polyuréthane sur la surface d'un pneumatique de véhicule, qui présente une bande de roulement profilée (3) présentant des rainures (4), des parois latérales (9) et des régions de talon (7),
**caractérisé en ce que**
un système de polyuréthane thixotrope ou fluide, à un ou deux composants, est appliqué directement sur le côté extérieur du pneumatique de véhicule, est moussé immédiatement à la suite de l'application, ou de manière retardée, puis est durci et forme au moins une couche d'isolation thermique (11a, 11b), les surfaces extérieures des régions du talon venant en contact avec une jante du pneu (2) et la surface d'appui au sol de la bande de roulement (3) étant épargnées.

2. Procédé selon la revendication 1, **caractérisé en ce que** le système de polyuréthane est appliqué sur le côté extérieur d'une paroi latérale (9) dans la région entre la surface extérieure de la région du talon (7) venant en contact avec la jante du pneu (2) et le bord latéral (3a) de la surface d'appui au sol de la bande de roulement (3).

3. Procédé selon la revendication 1, **caractérisé en ce que** le système de polyuréthane est appliqué dans des rainures (4) de la bande de roulement (3), en particulier sous forme de couche revêtant au moins en partie les rainures (4).

4. Procédé selon l'une quelconque des revendications 1 à 3, **caractérisé en ce que** le système de polyuréthane est appliqué au moyen d'un procédé analogue au procédé FIPFG (Formed-In-Place-Foam-Gasket).

5. Procédé selon l'une quelconque des revendications 1 à 4, **caractérisé en ce que** le système de polyuréthane appliqué est basé sur du polyéther ou du polyester.
